# EUROPÄISCHE PATENTSCHRIFT

(11) **EP 2 284 043 B1**
(45) Veröffentlichungstag und Bekanntmachung des Hinweises auf die Patenterteilung: **19.09.2012**
(21) Anmeldenummer: 10170295.9
(22) Anmeldetag: 21.07.2010
(51) Int. Cl.: B60K 15/067, B60R 11/00

(54) **Befestigungsvorrichtung und Haltevorrichtung**
Fastening and holding device
Dispositif de fixation et support

(30) Priorität: 24.07.2009 DE 102009034722
(43) Veröffentlichungstag der Anmeldung: 16.02.2011
(73) Patentinhaber: J. Eberspächer GmbH & Co. KG, 73730 Esslingen (DE)
(72) Erfinder: Kohberg, Carsten, 44359, Dortmund (DE); Schulz, Marko, 44532, Lünen (DE)
(74) Vertreter: Bernhard, Uwe

(56) Entgegenhaltungen:
- EP-A1- 2 065 247
- WO-A1-2004/113110
- DE-A1-102006 044 165
- DE-U1- 29 922 147
- GB-A- 2 291 462
- US-A- 3 784 140
- US-A1- 2008 099 645
- US-B1- 6 648 286

## Beschreibung

Die vorliegende Erfindung betrifft eine Anordnung umfassend ein erstes Bauteil, ein zweites Bauteil und eine Befestigungsvorrichtung zum lösbaren Befestigen des ersten Bauteils an am zweiten Bauteil, insbesondere an einem Kraftfahrzeug. Die Erfindung betrifft außerdem eine Haltevorrichtung mit wenigstens einer derartigen Anordnung.

An Kraftfahrzeugen, insbesondere an Nutzfahrzeugen, oder an anderen Maschinen, sind Geräte und Einrichtungen zu befestigen, die bei Bedarf, z. B. für Wartungszwecke, wieder gelöst werden müssen. Das Montieren und Demontieren soll dabei möglichst einfach realisierbar sein. Hierzu kommen Befestigungsvorrichtungen bzw. Haltevorrichtungen der eingangs genannten Art zum Einsatz. Diese müssen einfach bedienbar sein und zuverlässig arbeiten. Bspw. sind Bestandteile einer Abgasanlage, wie z. B. eine Abgasnachbehandlungsbox, an einem Tragrahmen eines Nutzfahrzeugs zu montieren. Für Wartungszwecke kann es erforderlich sein, diese Box möglichst einfach wieder demontieren zu können.

Aus dem Dokument WO 2004/113110 A1 ist eine Anordnung bekannt, die ein Behälter für Betriebsstoffe, ein Kraftfahrzeugquerträger, und eine Befestigungsvorrichtung zum lösbaren Befestigen des Behälters am Kraftfahrzeugquerträger umfasst, wobei die Befestigungsvorrichtung mit einem an dem Kraftfahrzeugquerträger befestigten Lagerbock ausgestattet ist, der einen Ankervorsprung aufweist, wobei die Befestigungsvorrichtung mit einer an dem Behälter befestigten Ankerkonsole ausgestattet ist, die einen Ankerhaken zum Einhaken am Ankervorsprung und eine Verriegelungseinrichtung aufweist, die zwischen einem Entriegelungszustand, in dem der Ankerhaken am Ankervorsprung einhakbar und davon lösbar ist, und einem Verriegelungszustand verstellbar ist, in dem der Ankervorsprung am daran eingehakten Ankerhaken festgelegt ist.

Aus dem Dokument GB 2291462 A ist weiterhin aus dem Bereich des Gerüstbaus eine Verriegelungseinrichtung einer Querstrebe an einem Stab bekannt die einen Riegel aufweist, der zwischen einer Verriegelungsstellung, in welcher der Riegel den Stab hintergreift, und einer Entriegelungsstellung verschwenkbar gelagert ist, in welcher der Riegel vom Stab freikommt, wobei die Verriegelungseinrichtung eine Sicherungseinrichtung aufweist, die zwischen einem Sicherungszustand, in dem sie den Riegel in dessen Verriegelungsstellung sichert, und einem Entsicherungszustand verstellbar ist, in dem sie den Riegel freigibt.

Die vorliegende Erfindung beschäftigt sich mit dem Problem, für eine Anordnung mit einer Befestigungsvorrichtung bzw. für eine Haltevorrichtung der eingangs genannten Art eine verbesserte oder zumindest eine andere Ausführungsform anzugeben, die sich durch eine zuverlässige Funktionsweise sowie durch eine einfache Handhabung auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Befestigungsvorrichtung mit einem Lagerbock, einer Ankerkonsole und einer Verriegelungseinrichtung auszustatten. Der Lagerbock weist einen Ankerbolzen auf, an dem ein Ankerhaken der Ankerkonsole einhakbar ist. Die Verriegelungseinrichtung ist zwischen einem Entriegelungszustand und einem Verriegelungszustand verstellbar. Im Entriegelungszustand ist der Ankerhaken am Ankerbolzen einhakbar und davon lösbar. Im Verriegelungszustand ist der Ankerbolzen am daran eingehakten Ankerhaken festgelegt. Die so geschaffene Verbindung ist im Verriegelungszustand dann nicht mehr lösbar. Durch die Einhakbarkeit des Ankerhakens am Ankerbolzen ergibt sich eine einfache Handhabung für das Montieren und Demontieren des jeweiligen, anzubauenden Bauteils. Die Verriegelungseinrichtung führt zu einer hohen Funktionssicherheit für den Verriegelungszustand und vereinfacht die Montage und Demontage im Entriegelungszustand.

Die Verriegelungseinrichtung ist mit einem Riegel ausgestattet, der an der Ankerkonsole um eine parallel zum Ankerbolzen verlaufende Schwenkachse zwischen einer Verriegelungsstellung und einer Entriegelungsstellung verschwenkbar gelagert ist. In der Verriegelungsstellung hintergreift der Riegel den Ankerbolzen. Hierdurch ergibt sich eine formschlüssige Sicherung des Ankerbolzens im bzw. am Ankerhaken. In der Entriegelungsstellung kommt der Riegel vom Ankerbolzen frei, wodurch der Ankerhaken ungestört am Ankerbolzen einhakbar und davon lösbar ist.

Die Verriegelungseinrichtung umfasst eine Sicherungseinrichtung , die zwischen einem Sicherungszustand und einem Entsicherungszustand verstellbar ist. Im Sicherungszustand sichert die Sicherungseinrichtung den Riegel in dessen Verriegelungsstellung. Im Entsicherungszustand gibt die Sicherungseinrichtung den Riegel frei, wodurch er zwischen seiner Verriegelungsstellung und seiner Entriegelungsstellung verschwenkbar ist. Hierdurch wird eine funktionale Trennung zwischen der Verriegelung und der Sicherung erreicht, was einerseits die Handhabung der Befestigungsvorrichtung vereinfacht und andererseits die Güte der erzielbaren Verriegelung erhöht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Seitenansicht eines Anbauteils, das mittels einer Haltevorrich- tung an einem Trägerbauteil befestigt ist,
- Fig. 2: eine perspektivische Ansicht der Haltevorrichtung im montierten Zustand,

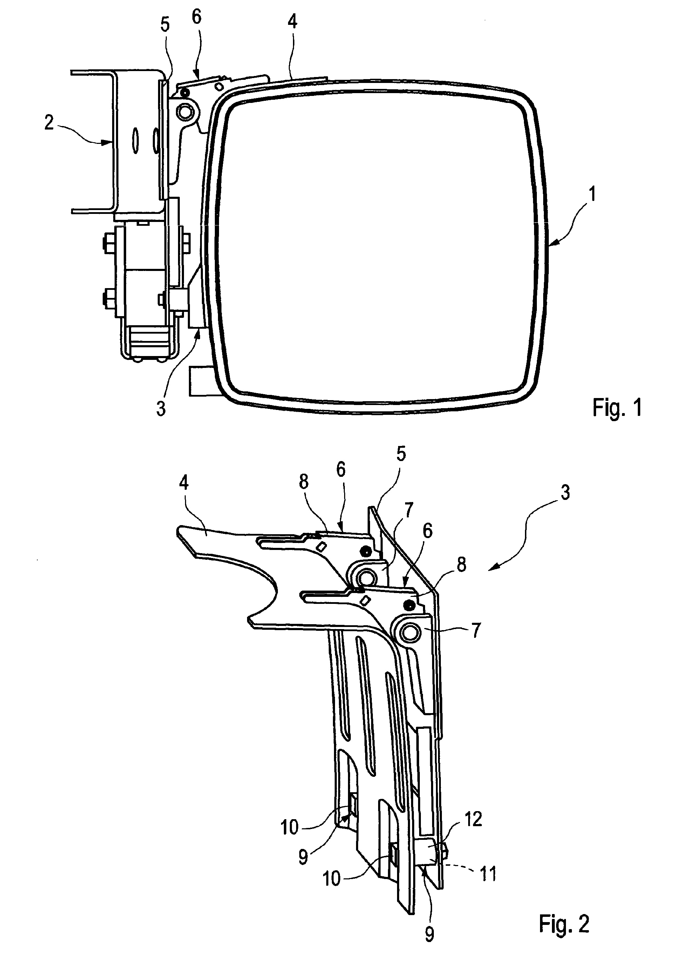

- Fig. 2: eine Seitenansicht einer Befestigungsvorrichtung,

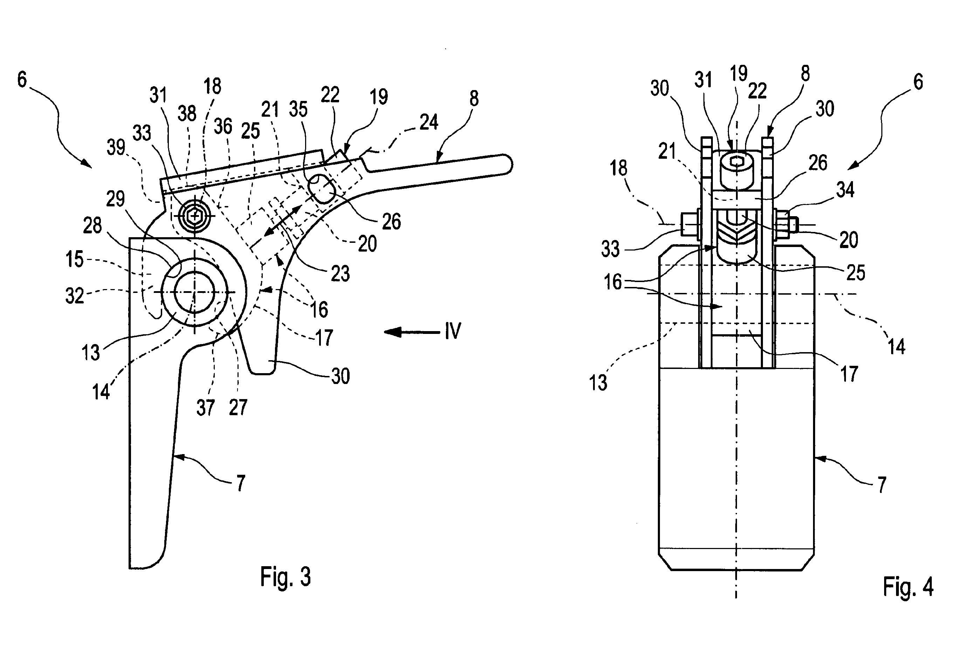

- Fig. 4: eine Frontansicht der Befestigungsvorrichtung entsprechend einer Blickrichtung IV in Fig. 3,

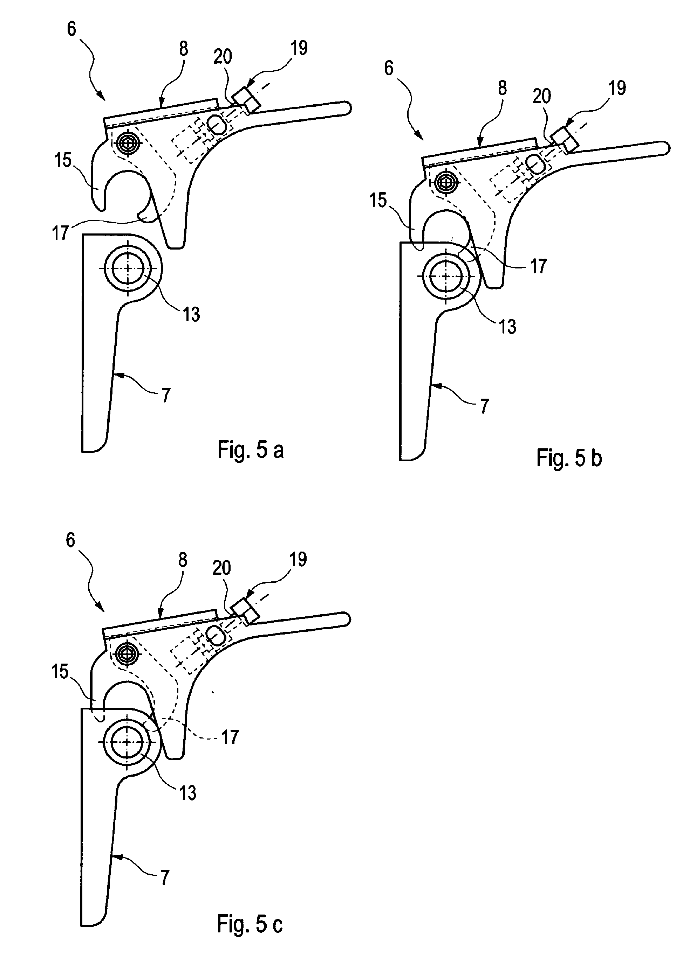

- Fig. 5a-g: jeweils eine Seitenansicht der Befestigungsvorrichtung bei unter- schiedlichen Zuständen.

Entsprechend Fig. 1 kann zum lösbaren Montieren eines Anbauteils 1 an einem Trägerbauteil 2 eine Haltevorrichtung 3 zum Einsatz kommen. Das Trägerbauteil 2 kann dabei ein Bestandteil eines hier im übrigen nicht gezeigten Kraftfahrzeuges sein, insbesondere ein Längsträger oder eine andere Tragstruktur. Beim Anbauteil 1 handelt es sich im Beispiel um eine Box, die bspw. Einrichtungen zur Abgasnachbehandlung enthalten kann.

Entsprechend Fig. 2 umfasst die Haltevorrichtung 3 eine Anbauplatte 4, die entsprechend Fig. 1 am Anbauteil 1 befestigt ist. Die Anbauplatte 4 kann dabei mittels Spannschellen oder mittels Schraubverbindungen oder mittels Schweißverbindungen oder mit einer anderen geeigneten Verbindungstechnik am Anbauteil 1 befestigt sein. Ferner umfasst die Haltevorrichtung 3 eine Trägerplatte 5, die am Trägerbauteil 2 befestigt ist. Bspw. kann die Trägerplatte 5 mit dem Trägerbauteil 2 verschraubt sein. Ebenso sind auch hier geeignete, andere Befestigungstechniken denkbar. Außerdem ist die Haltevorrichtung 3 mit wenigstens einer Befestigungsvorrichtung 6 ausgestattet. Im gezeigten, bevorzugten Beispiel umfasst die Haltevorrichtung 3 zwei derartige Befestigungsvorrichtungen 6. Die beiden Befestigungsvorrichtungen 6 sind dabei voneinander beabstandet angeordnet.

Entsprechend den Fig. 2 bis 4 dient eine derartige Befestigungsvorrichtung 6 zum lösbaren Befestigen eines ersten Bauteils, hier der Anbauplatte 4, an einem zweiten Bauteil, hier der Trägerplatte 5. Hierzu umfasst die jeweilige Befestigungsvorrichtung 6 einen Lagerbock 7, der an dem einen Bauteil, hier am zweiten Bauteil 5 bzw. an der einen Platte, hier an der Trägerplatte 5 befestigt ist. Bspw. ist der Lagerbock 7 am jeweiligen Bauteil 5 bzw. an der jeweiligen Platte 5 mittels einer Schweißverbindung befestigt. Außerdem umfasst die jeweilige Befestigungsvorrichtung 6 eine Ankerkonsole 8, die am anderen Bauteil, hier am ersten Bauteil 4 bzw. an der anderen Platte, hier an der Anbauplatte 4 befestigt ist. Auch hier wird zum Herstellen der Befestigung eine Schweißverbindung bevorzugt.

Entsprechend Fig. 2 kann die Haltevorrichtung 3 beabstandet zur jeweiligen Befestigungsvorrichtung 6 zumindest eine Drehsicherungseinrichtung 9 aufweisen. Im gezeigten Beispiel ist jeder Befestigungsvorrichtung 6 jeweils eine solche Drehsicherungseinrichtung 9 zugeordnet, sodass hier im Beispiel zwei Drehsicherungseinrichtungen 9 vorgesehen sind. Die jeweilige Drehsicherungseinrichtung 9 weist einen an der einen Platte, z. B. an der Anbauplatte 4 angeordneten Sicherungsstift 10 auf, der von der zugehörigen Platte, hier von der Anbauplatte 4 in Richtung zur anderen Platte, also hier zur Trägerplatte 5 absteht. Ferner umfasst die Drehsicherungseinrichtung 9 außerdem eine Stiftaufnahme 11, die an der jeweils anderen Platte, also hier an der Trägerplatte 5 angeordnet ist. Im montierten Zustand greift der jeweilige Sicherungsstift 10 in die jeweilige Stiftaufnahme 11 ein, wodurch die gewünschte Positionierung bzw. Drehsicherung durch Formschluss realisiert wird.

Entsprechend einer vorteilhaften Weiterbildung kann die jeweilige Drehsicherungseinrichtung 9 außerdem ein Dämpfungselement 12 aufweisen, über das die beiden Platten 4, 5 im montierten Zustand aneinander abgestützt sind. Im Beispiel ist das Dämpfungselement 12 als zylindrische Hülse ausgestaltet und koaxial zum Sicherungsstift 10 angeordnet. Außerdem ist die Stiftaufnahme 11 hier im Inneren des Dämpfungselements 12 angeordnet. Insbesondere kann die Stiftaufnahme 11 in das Dämpfungselement 12 integriert sein. Das Dämpfungselement 12 kann beispielsweise aus einem gummielastischen Kunststoff bestehen.

Entsprechend den Fig. 3 und 4 weist der Lagerbock 7 einen Ankerbolzen 13 auf, der im Beispiel zylindrisch ausgestaltet ist und eine Längsmittelachse 14 aufweist, die in Fig. 3 senkrecht zur Zeichnungsebene steht. Ferner ist im Beispiel der Ankerbolzen 13 als Hohlkörper ausgestaltet.

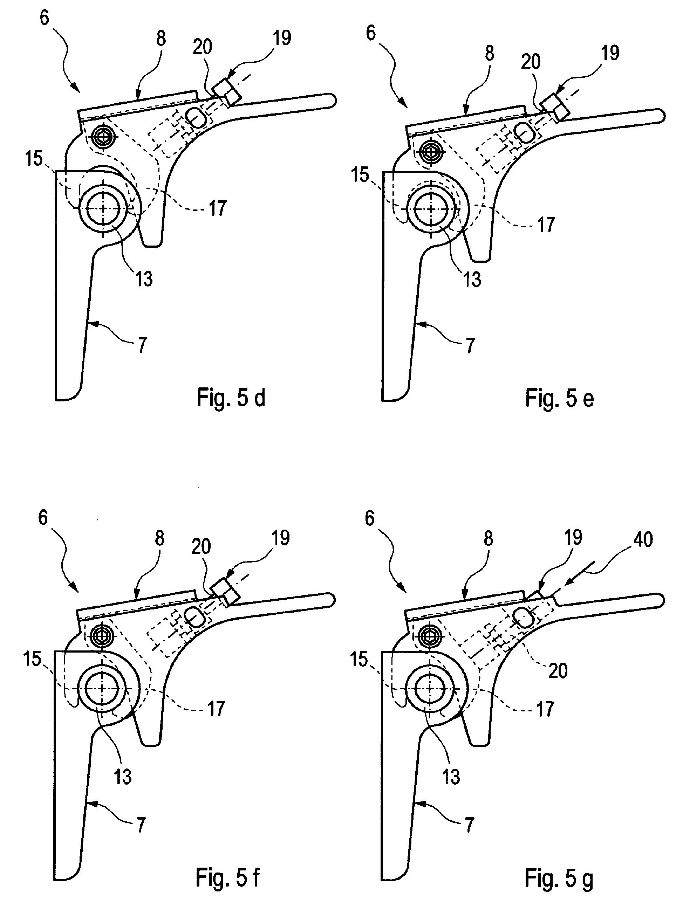

Die Ankerkonsole 8 weist einen Ankerhaken 15 auf, der so ausgestaltet ist, dass er am Ankerbolzen 13 einhakbar ist. Außerdem ist an der Ankerkonsole 8 eine Verriegelungseinrichtung 16 ausgebildet, die zwischen einem z. B. in den Fig. 3 und 5g gezeigten Verriegelungszustand und einem z. B. in den Fig. 5a bis 5f gezeigten Entriegelungszustand verstellbar ist. Im Entriegelungszustand ist der Ankerhaken 15 am Ankerbolzen 13 einhakbar und davon lösbar. Im Verriegelungszustand ist der Ankerbolzen 13 am daran eingehakten Ankerhaken 15 festgelegt. Hierzu weist die Verriegelungseinrichtung 16 einen Riegel 17 auf. Dieser ist an der Ankerkonsole 8 um eine Schwenkachse 18 verschwenkbar. Diese Schwenkachse 18 erstreckt sich dabei parallel zum Ankerbolzen 13 bzw. parallel zu dessen Längsmittelachse 14. Dabei ist der Riegel 17 um seine Schwenkachse 18 zwischen einer Verriegelungsstellung gemäß den Fig. 3, 5a, 5b, 5f und 5g und einer Entriegelungsstellung gemäß den Fig. 5c, 5d und 5e, verschwenkbar. In der Verriegelungsstellung hintergreift der Riegel 17 den am Ankerhaken 15 eingehängten Ankerbolzen 13, wodurch dieser formschlüssig am Ankerhaken 15 festgelegt ist. In der Entriegelungsstellung kommt der Riegel 17 vom Ankerbolzen 13 frei, wodurch der Ankerhaken 15 vom Ankerbolzen 13 lösbar ist bzw. daran einhängbar ist.

Die Verriegelungseinrichtung 16 umfasst außerdem eine Sicherungseinrichtung 19. Diese ist zwischen einem in den Fig. 3 und 5g gezeigten Sicherungszustand und einem in den Fig. 5a bis 5f gezeigten Entsicherungszustand verstellbar. In ihrem Sicherungszustand sichert die Sicherungseinrichtung 19 den Riegel 17 in dessen Verriegelungsstellung, wodurch der Riegel 17 nicht mehr in seine Entriegelungsstellung verschwenkbar ist. In ihrem Entsicherungszustand gibt die Sicherungseinrichtung 19 den Riegel 17 frei, sodass er zwischen seiner Verriegelungsstellung und seiner Entriegelungsstellung verschwenkbar ist. Die Sicherungseinrichtung 19 ist ebenfalls an der Ankerkonsole 8 angeordnet.

Die Sicherungseinrichtung 19 umfasst im gezeigten Beispiel ein Sicherungselement 20, das an der Ankerkonsole 8 verstellbar angebracht ist, und zwar derart, dass es zwischen einer in den Fig. 3 und 5g gezeigten Sicherungsstellung und einer in den Fig. 5a bis 5f gezeigten Entsicherungsstellung verstellbar ist. In seiner Sicherungsstellung ragt das Sicherungselement 20 in einen Schwenkweg des Riegels 17 hinein und behindert dadurch ein Verschwenken des Riegels 17 aus dessen Verriegelungsstellung in dessen Entriegelungsstellung. Dabei stützt sich das Sicherungselement 20 direkt oder indirekt am Riegel 17 ab. In der Entsicherungsstellung ist das Sicherungselement 20 aus dem Schwenkweg des Riegels 17 herausbewegt, sodass der Riegel 17 ungehindert zwischen seiner Verriegelungsstellung und seiner Entriegelungsstellung verschwenkbar ist. Bevorzugt wird dabei die hier gezeigte Variante, bei welcher das Sicherungselement 20 in der Ankerkonsole 8 linear verstellbar angeordnet ist. Bspw. kann es sich beim Sicherungselement 20 um eine Schraube mit Außengewinde handeln, die mit einem an der Ankerkonsole 8 ausgebildeten Innengewinde oder Gewinde 21 zusammenwirkt. Diese Schraube wird im folgenden ebenfalls mit 20 bezeichnet. Die Schraube 20 kann in üblicher Weise einen Schraubenkopf 22 aufweisen, der im Beispiel einen Inneninbus besitzt, um die Schraube 20 drehend antreiben zu können.

Eine in Fig. 3 durch einen Doppelpfeil angedeutete Verstellrichtung 23 des Sicherungselements 20 verläuft zweckmäßig senkrecht zum Ankerbolzen 13. Im eingehängten Zustand steht die Verstellrichtung 23 senkrecht zur Längsmittelachse 14 des Ankerbolzens 13. Besonders vorteilhaft ist es, wenn eine Längsmittelachse 24 des Sicherungselements 20 im eingehängten Zustand des Ankerhakens 15 senkrecht zur Längsmittelachse 14 des Ankerbolzens 13 verläuft. Zur Abstützung des Sicherungselements 20 am Riegel 17 kann das Sicherungselement 20 einen Abstützkörper 25 aufweisen. Dieser Abstützkörper 25 ist am Sicherungselement 20 beweglich angeordnet, wodurch Lageabweichungen zwischen Riegel 17 und Sicherungselement 20 ausgleichbar sind. Somit stützt sich das Sicherungselement 20 über den Abstützkörper 25 indirekt am Riegel 17 ab. Der bewegliche Abstützkörper 25 kann bspw. als Kugelpfannenmutter ausgestaltet sein. Ebenso ist es möglich, den beweglichen Abstützkörper 25 als Tonnenmutter auszubilden. Ebenso sind andere bewegliche Ausgestaltungen für den Abstützkörper 25 möglich.

Bei der hier gezeigten Ausführungsform ist das zuvor genannte Gewinde 21, mit dem die Schraube 20 zusammenwirkt, in einem Gewindekörper 26 ausgebildet. Dieser Gewindekörper 26 ist an die Ankerkonsole 8 angebaut.

Der Riegel 17 besitzt an einer dem Ankerbolzen 13 zugewandten Innenseite eine Kreisbogenkontur 27. In der Verriegelungsstellung liegt der Riegel 17 über diese Kreisbogenkontur 27 an einer kreiszylindrischen Außenkontur 28 des Ankerbolzens 13 an. Hierdurch ergibt sich eine vergleichsweise geringe Bauteilbelastung an der Kontaktstelle. Zweckmäßig kann auch der Ankerhaken 15 an einer dem Ankerbolzen 13 zugewandten Innenseite 9 eine Kreisbogenkontur 29 aufweisen, an welcher der Ankerbolzen 13 im eingehakten Zustand anliegt. Auch hier wird eine Reduzierung der Belastung der Kontaktstelle erreicht. Die Kreisbogenkontur 29 des Ankerhakens 15 erstreckt sich dabei um weniger als 180° in der Umfangsrichtung des Ankerbolzens 13. Hierdurch kann der Ankerbolzen 13 einfach in den Ankerhaken 15 eingehakt bzw. daraus ausgehakt werden. Im Unterschied dazu erstreckt sich die Kreisbogenkontur 27 des Riegels 17 z. B. um etwa 90°. Im Verriegelungszustand addieren sich die Kreisbogenkontur 29 des Ankerhakens 15 und die Kreisbogenkontur 27 des Riegels 17, derart, dass der Ankerbolzen 13 im Verriegelungszustand um mehr als 180° umschlungen wird. Im gezeigten Beispiel umschlingen die beiden Kreisbogenkonturen 27 und 29 den Ankerbolzen 13 um etwa 270°. Hierdurch wird ein intensiver Formschluss erreicht, der eine effektive Anbindung der Ankerkonsole 8 am Lagerbock 7 ermöglicht.

Für eine preiswerte Herstellung kann die Ankerkonsole 8 entsprechend dem hier gezeigten Beispiel zwei voneinander beabstandete Seitenteile 30 und ein Verbindungsteil 31 aufweisen, das die beiden Seitenteile 30 miteinander verbindet. Die beiden Seitenteile 30 sind randseitig so geformt, dass sie jeweils einen Haken 32 aufweisen, wobei die beiden Haken 32 zusammen dann den Ankerhaken 15 bilden. Der Riegel 17 ist zwischen den beiden Seitenteilen 30 angeordnet. Bspw. kann der Riegel 17 mittels einer Schraube 33 und einer Mutter 34 schwenkbar an den Seitenteilen 30 angebracht sein. Auch die Sicherungseinrichtung 19 ist im Beispiel zwischen den beiden Seitenteilen 30 untergebracht. Insbesondere ist der weiter oben genannte Gewindekörper 26 an den Seitenteilen 30 festgelegt. Hierzu können die Seitenteile 30 jeweils eine Öffnung 35 aufweisen, in die ein komplementär geformter Fortsatz des Gewindekörpers 26 formschlüssig eingreift.

Die Ankerkonsole 8 ist zweckmäßig als Blechformteil konzipiert und kann aus einem einzigen Blechstück durch Umformung hergestellt sein. Auch beim Lagerbock 7 kann es sich um ein Blechformteil handeln. Ebenso kann es sich beim Lagerbock 7 um ein Gussteil handeln. Der Ankerbolzen 13 ist zweckmäßig in den Lagerbock 7 eingesteckt. Dabei kann er mit dem Lagerbock 7 verlötet oder verschweißt sein. Ebenso ist eine Presspassung denkbar. Ferner ist auch eine integrale Ausformung von Lagerbock 7 und Ankerbolzen 13 denkbar.

Durch die gewählte Formgebung des Ankerbolzens 13, nämlich die zylindrische Außenkontur 28 und die dazu komplementären Innenkonturen 27,29 des Riegels 17 bzw. des Ankerhakens 15, ergibt sich für die Ankerkonsole 8 eine Drehbarkeit um die Längsmittelachse 14 des Ankerbolzens 13, wenn die Ankerkonsole 8 am Lagerbock 7 angeordnet ist. Abhängig von den auftretenden Reibungskräften, kann diese Drehbarkeit auch im Verriegelungszustand und insbesondere auch im Sicherungszustand realisiert werden.

Bemerkenswert ist ferner, dass im montierten Zustand die Schwenkachse 18 des Riegels 17 oberhalb des Ankerbolzens 13 angeordnet ist und dabei insbesondere vertikal oberhalb der Längsmittelachse 14 des Ankerbolzens 13 verläuft.

Im gezeigten Beispiel besitzt der Riegel 17 an einer vom Ankerbolzen 13 abgewandten Außenseite eine ebene Kontaktfläche 36, an welcher sich das Sicherungselement 20, insbesondere über den Abstützkörper 25, abstützt. Diese Abstützung erfolgt im Sicherungszustand senkrecht, d. h., die Verstellrichtung 23 des Sicherungselements 20 steht senkrecht auf der ebenen Außenseite 36 des Riegels 17. Ferner ist der Riegel 17 an seinem von der Schwenkachse 18 entfernten Ende mit einer Rampenkontur 37 ausgestattet, die beim Einhaken des Ankerhakens 15 am Ankerbolzen 13 ein selbsttätiges Aufschwenken des Riegels 17 in eine Entriegelungsstellung ermöglicht. Außerdem ist der Riegel 17 mit einer Anschlagkontur 38 ausgestattet, die bei Erreichen der Verriegelungsstellung an einem entsprechenden Anschlag 39 der Ankerkonsole 8 zur Anlage kommt. Im Beispiel ist der Anschlag 39 durch die dem Riegel 17 zugewandte Innenseite des Verbindungsteils 31 gebildet. Das Zusammenwirken von Anschlagkontur 38 und Anschlag 39 verhindert bei vom Ankerbolzen 13 entferntem Ankerhaken 15 ein über die Verriegelungsstellung hinausgehendes Zuschwenken des Riegels 17, was ein Einhaken des Ankerhakens 15 am Ankerbolzen 13 behindern könnte.

Das Einhaken der Ankerkonsole 8 am Lagerbock 7 erfolgt entsprechend den Fig. 5a bis 5g wie folgt:
In den Fig. 5a bis 5f ist die Sicherungseinrichtung 19 in deren Entsicherungszustand überführt. Das Sicherungselement 20 nimmt seine Entsicherungsstellung ein. In der Folge ist der Riegel 17 um seine Schwenkachse 18 frei verschwenkbar. Das Sicherungselement 20 ist dabei aus dem Schwenkweg des Riegels 17 herausbewegt und gibt dadurch den Riegel 17 zum Verschwenken frei.
In Fig. 5a besteht keine Wechselwirkung zwischen Ankerkonsole 8 und Lagerbock 7. Der Riegel 17 nimmt bedingt durch das Zusammenwirken von Anschlagkontur 35 und Anschlag 39 seine Verriegelungsstellung ein.
In Fig. 5b entsteht durch die Annäherung von Ankerkonsole 8 und Lagerbock 7 ein erster Kontakt zwischen dem Riegel 17 und dem Ankerbolzen 13. Dieser Kontakt findet im Bereich der Rampenkontur 37 des Riegels 17 statt.
Entsprechend Fig. 5c bewirkt eine weitergehende Annäherung zwischen Ankerhaken 15 und Ankerbolzen 13 durch das Zusammenwirken von Rampenkontur 37 und Ankerbolzen 13 ein Aufschwenken des Riegels 17 in dessen Entriegelungsstellung.
Entsprechend Fig. 5d und 5e kann der Riegel 17 bei fortschreitender Annäherung zwischen Ankerhaken 15 und Ankerbolzen 13 den Ankerbolzen 13 zunehmend umgreifen.
In Fig. 5f hat der Riegel 17 wieder seine Verriegelungsstellung erreicht, in der er den Ankerbolzen 13 weitgehend umgreift. Gleichzeitig ist der Ankerhaken 15 in diesem Zustand vollständig am Ankerbolzen 13 eingehakt.
Anschließend wird nun entsprechend Fig. 5g die Sicherungseinrichtung in deren Sicherungszustand überführt. Das bedeutet in diesem Fall, dass das Sicherungselement 20 in seine Sicherungsstellung überführt wird. In diesem Fall ist das Sicherungselement 20 in den Schwenkweg des Riegels 17 hineinbewegt. Ferner stützt es sich direkt oder indirekt am Riegel 17 ab und verhindert ein Aufschwenken aus der Verriegelungsstellung. Dabei kann entsprechend einem Pfeil 40 eine Sicherungskraft in das System eingeleitet werden, um den Riegel 17 gegen den Ankerbolzen 13 und somit den Ankerbolzen 13 in den Ankerhaken 15 vorzuspannen. Die Sicherungskraft 40 kann dabei durch das Zusammenspiel der Anschlagkontur 38 mit dem Anschlag 39 begrenzt werden. Ferner kann diese Sicherungskraft 40 auch durch das Anliegen des Schraubenkopfs 22 am Gewindekörper 26 begrenzt werden.

## Patentansprüche

1. Anordnung umfassend ein erstes Bauteil (4), ein zweites Bauteil (5) und eine Befestigungsvorrichtung (6) zum lösbaren Befestigen des ersten Bauteils (4) am zweiten Bauteil (5),
- wobei die Befestigungsvorrichtung (6) mit einem an dem zweiten Bauteil (5) befestigten Lagerbock (7) ausgestattet ist, der einen Ankerbolzen (13) aufweist,
- wobei die Befestigungsvorrichtung (6) mit einer an dem ersten Bauteil (4) befestigen Ankerkonsole (8) ausgestattet ist, die einen Ankerhaken (15) zum Einhaken am Ankerbolzen (13) und eine Verriegelungseinrichtung (16) aufweist, die zwischen einem Entriegelungszustand, in dem der Ankerhaken (15) am Ankerbolzen (13) einhakbar und davon lösbar ist, und einem Verriegelungszustand verstellbar ist, in dem der Ankerbolzen (13) am daran eingehakten Ankerhaken (15) festgelegt ist,
- wobei die Verriegelungseinrichtung (16) einen Riegel (17) aufweist, der an der Ankerkonsole (8) um eine parallel zum Ankerbolzen (13) verlaufende Schwenkachse (18) zwischen einer Verriegelungsstellung, in welcher der Riegel (17) den Ankerbolzen (13) hintergreift, und einer Entriegelungsstellung verschwenkbar gelagert ist, in welcher der Riegel (17) vom Ankerbolzen (13) freikommt,
- wobei die Verriegelungseinrichtung (16) eine Sicherungseinrichtung (19) aufweist, die zwischen einem Sicherungszustand, in dem sie den Riegel (17) in dessen Verriegelungsstellung sichert, und einem Entsicherungszustand verstellbar ist, in dem sie den Riegel (17) freigibt.

2. Anordnung nach Anspruch 1,
**dadurch gekennzeichnet,**
**dass** die Sicherungseinrichtung (19) ein Sicherungselement (20) aufweist, das an der Ankerkonsole (8) zwischen einer Sicherungsstellung, in der es in einen Schwenkweg des in dessen Veiriegelüngsstellüng überführten Riegels (17) hineinragt und sich direkt oder indirekt am Riegel (17) abstützt, und einer Entsicherungsstellung verstellbar angebracht ist, in der es aus dem Schwenkweg des Riegels (17) heraus bewegt ist.

3. Anordnung nach Anspruch 2,
**dadurch gekennzeichnet,**
**dass** das Sicherungselement (20) an der Ankerkonsole (8) linear verstellbar angeordnet ist, wobei insbesondere vorgesehen sein kann, dass eine Verstellrichtung (23) des Sicherungselements (20) senkrecht zum Ankerbolzen (13) verläuft und insbesondere im am Ankerhaken (15) eingehängten Zustand senkrecht zu einer Längsmittelachse (14) des Ankerbolzens (13) verläuft.

4. Anordnung nach Anspruch 2 oder 3,
**dadurch gekennzeichnet,**
**dass** das Sicherungselement (20) einen beweglichen Abstützkörper (25) trägt, über den sich das Sicherungselement (20) in seiner Sicherungsstellung am Riegel (17) abstützt, wobei insbesondere vorgesehen sein kann, dass der Abstützkörper (25) eine Kugelpfannenmutter oder eine Tonnenmutter ist.

5. Anordnung nach einem der Ansprüche 2 bis 4,
**dadurch gekennzeichnet,**
**dass** das Sicherungselement als Schraube (20) ausgestattet ist, die mit einem an der Außenkonsole (8) ausgebildeten Gewinde (21) zusammenwirkt, wobei insbesondere vorgesehen sein kann, dass das Gewinde (21) in einem Gewindekörper (26) ausgebildet ist, der an die Ankerkonsole (8) angebaut ist.

6. Anordnung nach einem der Ansprüche 1 bis 5,
**dadurch gekennzeichnet,**
**dass** der Riegel (17) an einer dem Ankerbolzen (13) zugewandten Innenseite eine Kreisbogenkontur (27) aufweist, über die er in seiner Verriegelungsstellung an einer kreiszylindrischen Außenkontur (28) des Ankerbolzens (13) anliegt.

7. Anordnung nach einem der Ansprüche 1 bis 6,
**dadurch gekennzeichnet,**
**dass** der Ankerhaken (15) an einer dem Ankerbolzen (13) zugewandten Innenseite eine Kreisbogenkontur (29) aufweist, über die er im eingehakten Zustand an einer kreiszylindrischen Außenkontur (28) des Ankerbolzens (13) anliegt.

8. Anordnung nach den Ansprüchen 6 und 7,
**dadurch gekennzeichnet,**
- **dass** sich die Kreisbogenkontur (29) des Ankerhakens (15) um weniger als 180° in Umfangsrichtung des Ankerbolzens (13) erstreckt,
- **dass** sich die Kreisbogenkonturen (27,29) des Ankerhakens (15) und des Riegels (17) im Verriegelungszustand um mehr als 180°, z. B. um etwa 270°, in Umfangsrichtung des Ankerbolzens (13) erstrecken.

9. Anordnung nach einem der Ansprüche 1 bis 8,
**dadurch gekennzeichnet,**
- **dass** die Ankerkonsole (8) zwei voneinander beabstandete Seitenteile (30) und ein die beiden Seitenteile (30) miteinander verbindendes Verbindungsteil (31) aufweist,
- **dass** die Seitenteile (30) randseitig jeweils einen Haken (32) ausformen, die zusammen den Ankerhaken (15) bilden.

10. Anordnung nach Anspruch 9,
**dadurch gekennzeichnet,**
**dass** der Riegel (17) zwischen den Seitenteilen (30) angeordnet ist.

11. Haltevorrichtung zum lösbaren Montieren eines Anbauteils (1) an einem Trägerbauteil (2), insbesondere an einem Kraftfahrzeug,
- mit einer Anbauplatte (4), die am Anbauteil (1) befestigt oder befestigbar ist,
- mit einer Trägerplatte (5), die am Trägerbauteil (2), insbesondere eines Kraftfahrzeugs, befestigt oder befestigbar ist,
- mit mindestens einer Anordnung nach einem der Ansprüche 1 bis 10, deren Ankerkonsole (8) an der einen Platte (4) und deren Lagerbock (7) an der anderen Platte (5) befestigt ist.

12. Haltevorrichtung nach Anspruch 11,
**dadurch gekennzeichnet,**
**dass** beabstandet zur jeweiligen Befestigungsvorrichtung (6) zumindest eine Drehsicherungseinrichtung (9) vorgesehen ist, die einen an der einen Platte (4) angeordneten Sicherungsstift (10) und eine an der anderen Platte (5) angeordnete Stiftaufnahme (11) aufweist, in die der Sicherungsstift (10) eintaucht.

13. Haltevorrichtung nach Anspruch 12,
**dadurch gekennzeichnet,**
**dass** die Drehsicherungseinrichtung (9) ein Dämpfungselement (12) aufweist, über das die Platten (4,5) aneinander abgestützt sind.

14. Kraftfahrzeug mit einem Anbauteil (1), einem Trägerbauteil (2) und entweder einer Anordnung nach einem der Ansprüche 1 bis 10 oder einer Haltevorrichtung (3) nach einem der Ansprüche 11 bis 13, wobei das Anbauteil (1) an der Anbauplatte (4) befestigt ist oder das erste Bauteil (4) bildet, während das Trägerbauteil (2) an der Trägerplatte (5) befestigt ist oder das zweite Bauteil (5) bildet.

## Claims

1. An arrangement comprising a first component (4), a second component (5) and a fastening device (6) for the releasable fastening of the first component (4) to the second component (5),
- wherein the fastening device (6) is equipped with a bearing pedestal (7) fastened to the second component (5), which bearing pedestal (7) comprises an anchor bolt (13),
- wherein the fastening device (6) is equipped with an anchor console (8) fastened to the first component (4), which anchor console (8) comprises an anchor hook (15) for hooking into the anchor bolt (13) and a locking device (16), which can be adjusted between an unlocking state, in which the anchor hook (15) can be hooked into the anchor bolt (13) and released from the latter, and a locking state, in which the anchor bolt (13) is fixed on the anchor hook (15) hooked into said anchor bolt (13),
- wherein the locking device (16) comprises a bolt (17), which is pivotably mounted on the anchor console (8) about a pivot axis (18) running parallel to the anchor bolt (13) between a locking position, in which the bolt (17) engages behind the anchor bolt (13) and an unlocking position, in which the bolt (17) is released from the anchor bolt (13),
- wherein the locking device (16) comprises a securing device (19), which is adjustable between a securing state, in which it secures the bolt (17) in its locking position and an unsecured-state, in which it releases the bolt (17) .

2. The arrangement according to Claim 1,
**characterized in that**
the securing device (19) comprises a securing element (20), which is adjustably attached to the anchor console (8) between a securing position, in which it protrudes into a pivot path of the bolt (17) transferred into its locking position and directly or indirectly supports itself on the bolt (17) and an unsecured position, in which it is moved out of the pivot path of the bolt (17).

3. The arrangement according to Claim 2,
**characterized in that**
the securing element (20) is attached to the anchor console (8) in a linearly adjustable manner, wherein it can be provided in particular that an adjusting direction (23) of the securing element (20) runs perpendicularly to the anchor bolt (13) and in particular, in the state hooked into the anchor bolt (15), runs perpendicularly to a longitudinal centre axis (14) of the anchor bolt (13).

4. The arrangement according to Claim 2 or 3,
**characterized in that**
the securing element (20) carries a moveable support body (25), via which the securing element (20) in its securing position supports itself on the bolt (17), wherein it can be provided in particular that the support body (25) is a ball socket nut or a barrel nut.

5. The arrangement according to any one of the Claims 2 to 4,
**characterized in that**
the securing element is configured as a screw (20) which interacts with a thread (21) formed on the outer console (8), wherein it can be provided in particular that the thread (21) is formed in a threaded body (26), which is attached to the anchor console (8).

6. The arrangement according to any one of the Claims 1 to 5,
**characterized in that**
the bolt (17) on an inside facing the anchor bolt (13) comprises a circular arc contour (27), via which in its locking position it bears against a circle-cylindrical outer contour (28) of the anchor bolt (13).

7. The arrangement according to any one of the Claims 1 to 6,
**characterized in that**
the anchor hook (15) on an inside facing the anchor bolt (13) has a circular arc contour (29), via which in the hooked-in state it bears against a circle-cylindrical outer contour (28) of the anchor bolt (13).

8. The arrangement according to the Claims 6 and 7, **characterized in that**
- the circular arc contour (29) of the anchor hook (15) extends in circumferential direction of the anchor bolt (13) by less than 180°,
- the circular arc contours (27, 29) of the anchor hook (15) and of the bolt (17) in the locking state extend in circumferential direction of the anchor bolt (13) by more than 180°, for example by approximately 270°.

9. The arrangement according to any one of the Claims 1 to 8,
**characterized in that**
- the anchor console (8) comprises two lateral parts (30) spaced from each other and a connecting part (31) interconnecting the two lateral parts (30).
- the lateral parts (30) on the edge side each form a hook (32), which together form the anchor hook (15).

10. The arrangement according to Claim 9,
**characterized in that**
the bolt (17) is arranged between the lateral parts (30).

11. A holding device for the releasable mounting of an attachment part (1) to a carrier component (2), in particular on a motor vehicle,
- with an attachment plate (4), which is fastened or can be fastened to the attachment part (1),
- with a carrier plate (5), which is fastened or can be fastened to the carrier component (2), in particular of a motor vehicle,
- with at least one arrangement according to any of the Claims 1 to 10, whose anchor console (8) is fastened to the one plate (4) and its bearing pedestal (7) on the other plate (5).

12. The holding device according to Claim 11,
**characterized in that**
spaced from the respective fastening device (6) at least one anti-rotation device (9) is provided, which comprises a securing pin (10) arranged on the one plate (4) and a pin receptacle (11) arranged on the other plate (5), into which the securing pin (10) dips.

13. The holding device according to Claim 12,
**characterized in that**
the anti-rotation device (9) comprises a damping element (12), via which the plates (4, 5) are supported on each other.

14. A motor vehicle with an attachment part (1), a carrier component (2) and either an arrangement according to any one of the Claims 1 to 10 or a holding device (3) according to any one of the Claims 11 to 13, wherein the attachment part (1) is fastened to the attachment plate (4) or forms the first component (4), while the carrier component (2) is fastened to the carrier plate (5) of forms the second component (5).

## Revendications

1. Agencement comprenant un premier composant (4), un second composant (5) et un dispositif de fixation (6) pour la fixation amovible du premier composant (4) sur le second composant (5),
- le dispositif de fixation (6) étant équipé d'un support de palier (7) fixé sur le second composant (5), lequel présente un boulon d'ancrage (13),
- le dispositif de fixation (6) étant équipé d'une console d'ancrage (8) fixée sur le premier composant (4), laquelle console présente un crochet d'ancrage (15) pour l'accrochage sur le boulon d'ancrage (13) et un dispositif de verrouillage (16) qui peut être déplacé entre un état de déverrouillage, dans lequel le boulon d'ancrage (15) peut être accroché sur le boulon d'ancrage (13) et peut en être détaché, et un état de verrouillage, dans lequel le boulon d' ancrage (13) est fixé sur le crochet d' ancrage (15) accroché dessus
- le dispositif de verrouillage (16) présentant un verrou (17), qui est placé de façon à pouvoir basculer sur la console d'ancrage (8) autour d'un axe de basculement (18) agencé parallèlement au boulon d'ancrage (13) entre une position de verrouillage, dans laquelle le verrou (17) saisit à l'arrière le boulon d'ancrage (13), et une position de déverrouillage, dans laquelle le verrou (17) est libéré du boulon d'ancrage (13),
- le dispositif de verrouillage (16) présentant un dispositif de blocage (19) qui peut être déplacé entre un état de blocage dans lequel il bloque le verrou (17) dans sa position de verrouillage, et une position de déblocage, dans laquelle il libère le verrou (17).

2. Agencement selon la revendication 1,
**caractérisé en ce que**
le dispositif de blocage (19) présente un élément de blocage (20), qui est placé sur la console d'ancrage (8) de façon à pouvoir se déplacer entre une position de blocage, dans laquelle il dépasse dans une trajectoire de basculement du verrou (17) transféré dans sa position de verrouillage et s'appuie directement ou indirectement sur le verrou (17), et une position de déblocage, dans laquelle il est déplacé en sortant de la trajectoire de basculement du verrou (17).

3. Agencement selon la revendication 2,
**caractérisé en ce que**
l'élément de blocage (20) est disposé sur la console d'ancrage (8) de façon déplaçable linéairement, sachant qu'on peut prévoir en particulier qu'un dispositif de réglage (23) de l'élément de blocage (20) est agencé perpendiculairement au boulon d'ancrage (13) et est agencé, en particulier dans l'état accroché sur le crochet d'ancrage (15), perpendiculairement à un axe médian longitudinal (14) du boulon d' ancrage (13).

4. Agencement selon la revendication 2 ou 3,
**caractérisé en ce que**
l'élément de blocage (20) porte un corps de soutien (25) mobile, par lequel l'élément de blocage (20) s'appuie dans sa position de blocage sur le verrou (17), en sachant qu'on peut prévoir en particulier que le corps de soutien (25) est un écrou à coussinet sphérique ou un écrou en berceau.

5. Agencement selon l'une des revendications 2 à 4,
**caractérisé en ce que**
l'élément de blocage est conçu comme vis (20), qui interagit avec un filetage (21) formé sur la console extérieure (8), en sachant qu'on peut prévoir en particulier que le filetage (21) est conçu dans un corps fileté (26), qui est monté sur la console d'ancrage (8).

6. Agencement selon l'une des revendications 1 à 5,
**caractérisé en ce que**
le verrou (17) présente sur un côté intérieur tourné vers le boulon d'ancrage (13) un contour d'arc de cercle (27), par lequel il s'applique dans sa position de verrouillage sur un contour extérieur (28) cylindrique circulaire du boulon d'ancrage (13).

7. Agencement selon l'une des revendications 1 à 6,
**caractérisé en ce que**
le boulon d'ancrage (15) présente sur un côté intérieur, associé au boulon d'ancrage (13), un contour d'arc de cercle (29), par lequel il s'applique, dans l'état accroché, sur un contour extérieur (28) cylindrique circulaire du boulon d'ancrage (13).

8. Agencement selon les revendications 6 et 7,
**caractérisé en ce que**
- le contour d'arc de cercle (29) du crochet d'ancrage (15) s'étend de moins de 180° dans le sens périphérique du boulon d'ancrage (13),
- **en ce que** les contours d'arc de cercle (27, 29) du crochet d'ancrage (15) et du verrou (17) s'étendent dans l'état de verrouillage sur plus de 180°, par exemple sur environ 270°, dans le sens périphérique du boulon d'ancrage (13).

9. Agencement selon l'une des revendications 1 à 8,
**caractérisé en ce que**
- la console d'ancrage (8) présente deux parties latérales (30) espacées l'une de l'autre et une partie de liaison (31) reliant les deux parties latérales (30) l'une avec l'autre
- **en ce que** les parties latérales (30) forment côté bord à chaque fois un crochet (32), lesquelles forment ensemble le crochet d'ancrage (15).

10. Agencement selon la revendication 9,
**caractérisé en ce que**
le verrou (17) est disposé entre les parties latérales (30) .

11. Dispositif de retenue pour le montage amovible d'une partie rapportée (1) sur un composant support (2), en particulier sur un véhicule automobile,
- comprenant une plaque rapportée (4) qui est fixée ou peut être fixée sur la partie rapportée (1),
- une plaque support (5) qui est fixée ou peut être fixée sur le composant support (2), en particulier d'un véhicule,
- comprenant au moins un agencement selon l'une des revendications 1 à 10, dont la console d' ancrage (8) est fixée sur l'une des plaques (4) et dont le support de palier (7) est fixé sur l'autre plaque (5).

12. Dispositif de retenue selon la revendication 11,
**caractérisé en ce qu'**
un système de blocage de rotation (9) est disposé à distance du dispositif de fixation respectif (6), lequel système présente une goupille de blocage (10) disposée sur une plaque (4) et un logement de goupille (11) disposé sur l'autre plaque (5), logement dans lequel la goupille de blocage (10) plonge.

13. Dispositif de retenue selon la revendication 12,
**caractérisé en ce que**
le système de blocage de rotation (9) présente un élément d'amortissement (12) par lequel les plaques (4, 5) sont appuyées les unes près des autres.

14. Véhicule comprenant une partie rapportée (1), un composant support (2) et soit un agencement selon l'une des revendications 1 à 10 soit un dispositif de retenue (3) selon l'une des revendications 11 à 13, la partie rapportée (1) étant fixée sur la plaque rapportée (4) ou formant le premier composant (4), alors que le composant support (2) est fixé sur la plaque support (5) ou forme le second composant (5).
